# EUROPEAN PATENT APPLICATION

(11) **EP 2 230 125 A1**
(43) Date of publication of application: **22.09.2010**
(21) Application number: 10157248.5
(22) Date of filing: 22.03.2010
(51) Int. Cl.: B60N 2/28, B60N 2/427

(54) **Frame which can be connected to a car seat and which has a supporting area for a child seat**

(30) Priority: 20.03.2009 IT MO20090065
(71) Applicant: Bellelli S.R.L., 45021 Badia Polesine RO (IT)
(72) Inventor: Bellelli, Tiziano, 45021 Badia Polesine (RO) (IT)
(74) Representative: Brogi, Graziano

(57) **Abstract**

A safety device (1) comprises a frame (2), having two fastening areas (3) associable with a car seat (S) and a supporting area (4) for a child seat (A), and cushioning means associated with the frame (2) suitable for absorbing at least part of the kinetic energy of the child seat (A) during an accident and comprising either inelastic deformation means (14) placed between the fastening areas (3) and the supporting area (4) or fluid-dynamic means comprising at least a fluid (21) suitable for flowing out through an orifice (22) defined in the frame (2).

## Description

The present invention relates to an Isofix cushioned safety device, particularly for car child seats.

As is known to technicians in the sector, to improve the safety of children inside a car, an Isofix safety device has been conceived.

The term Isofix does in fact identify a supporting device for a child seat with a number of technical features that ensure a high degree of safety and comfort during transport.

More precisely, the Isofix devices comprise a frame associable with a child seat and having three fastening areas to the car, of which two areas of fixing to the car seat, which are secured to corresponding fixed elements positioned between the seating plane and the back, and an area of connection to a third point of the car to prevent the frame, and therefore the child seat, from rotating around the two fastening areas.

Generally speaking, the frame of the Isofix devices has two hooking elements parallel with one another, at the extremities of which are defined the fastening areas, and a supporting element, which connects with the two hooking elements and defines the child seat supporting area.

To the supporting element is then associated an anchoring element, which defines the connection area of the frame to the car and which can be of the type of a safety belt associated integral on the one hand to the supporting element itself and on the other hand to the car or be composed of a vertical upright extending crossways to the supporting element and resting on the floor of the car.

To ensure the child's safety even in the case of an accident occurring, a reduced percentage of Isofix devices has cushioning means suitable for absorbing at least part of the kinetic energy of the child seat, so as to reduce the intensity of the stress discharged on the child.

During an accident in fact, the car undergoes sudden deceleration which also affects the child seat, which by inertia would tend to move towards the front of the car itself, thus causing violent stress on the child.

A first type of cushioning means until now used in the Isofix devices envisages the use of a metal ring positioned in correspondence to the lower extremity of the vertical upright, i.e., in correspondence to the point in which the Isofix device rests on the floor of the car.

During an accident, the relative velocity maintained by tha seat with respect to the car results in a compression force being applied to the vertical upright, causing the crushing of the metal ring, which thus absorbs part of the kinetic energy of the child seat and at the same time allows a reduced relative movement of the child seat itself with respect to the car.

The Isofix devices characterised by this first type of cushioning means have a number of drawbacks.

In fact, the metal ring positioned in correspondence to the car floor absorbs a reduced quantity of kinetic energy, which is absorbed above all by the fixed elements associated with the frame fastening areas. This therefore means that the stress acting on the child seat, and consequently on the child, is in any case fairly intense.

Furthermore, this solution is constructively complex and difficult to install.

Another drawback of this type of known cushioning means consists in its high manufacturing and operating complexity.

A second known type of cushioning means envisages the fitting of a pneumatic cylinder to the Isofix device frame.

This pneumatic cylinder has a piston suitable for compressing the air inside a sealed chamber due to the effect of the relative movement of the seat during an accident.

The resistance offered by the air to the pressure exercised by the piston permits reducing the force acting on the child seat during an accident.

This type of cushioning means also has a number of drawbacks.

In fact, at the end of the accident, meaning when the energy with which the child seat is endowed has been completely exhausted, the air contained in the cylinder chamber pushes the piston in the direction opposite to the previous one by expansion. This return movement of the piston is discharged onto the child, who thus suffers a dangerous and potentially harmful counterblow.

The main aim of the present invention is to provide an Isofix cushioned safety device, which allows for an efficient cushioning of the stress acting on the child seat during an accident, and is at the same time easy to manufacture and install.

An object of the Isofix safety device according to the invention is to avoid that, following an accident, the cushioning means cause a counterblow on the child.

Yet another object of the present invention is to provide cushioning means that can be fitted to any type of Isofix safety device, and therefore characterised by extensive flexibility of use.

Another object of the present invention is to provide an Isofix cushioned safety device, comprising:
- a frame having at least two fastening areas associable with a car seat and at least a supporting area for a child seat;
- cushioning means associated with said frame and suitable for absorbing at least part of the kinetic energy of the child seat during an accident;
characterized by the fact that said cushioning means comprise:
- either inelastic deformation means placed between said fastening areas and said supporting area;
- or fluid-dynamic means comprising at least a fluid suitable for flowing out through an orifice defined in said frame.

Other characteristics and advantages of the present invention will become more evident from the description of several preferred, but not sole, embodiments of an Isofix cushioned safety device, illustrated purely as an example but not limited to the annexed drawings in which:

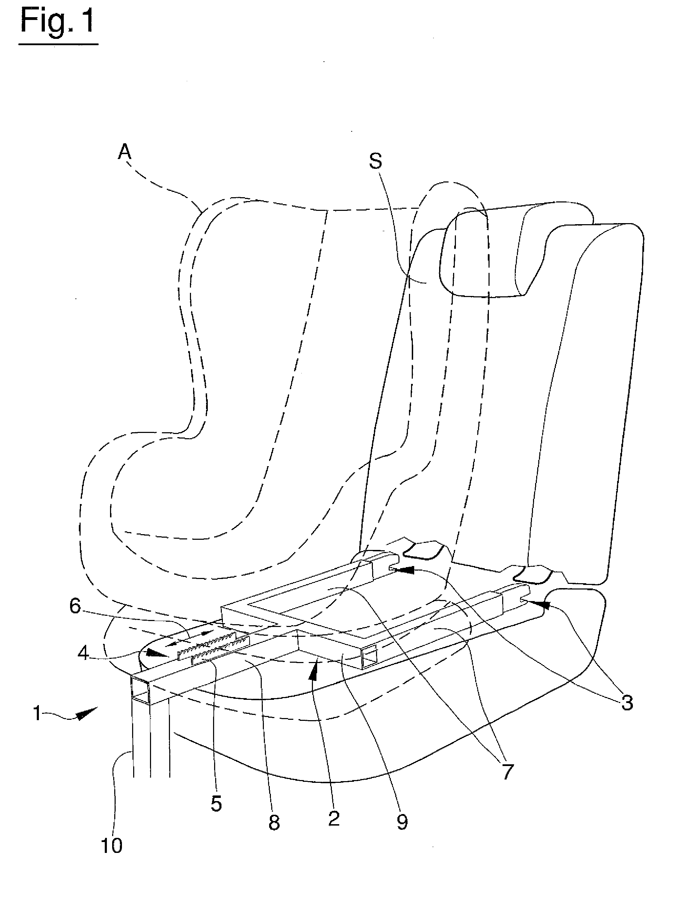

figure 1 is a partial perspective view of the safety device according to the invention;

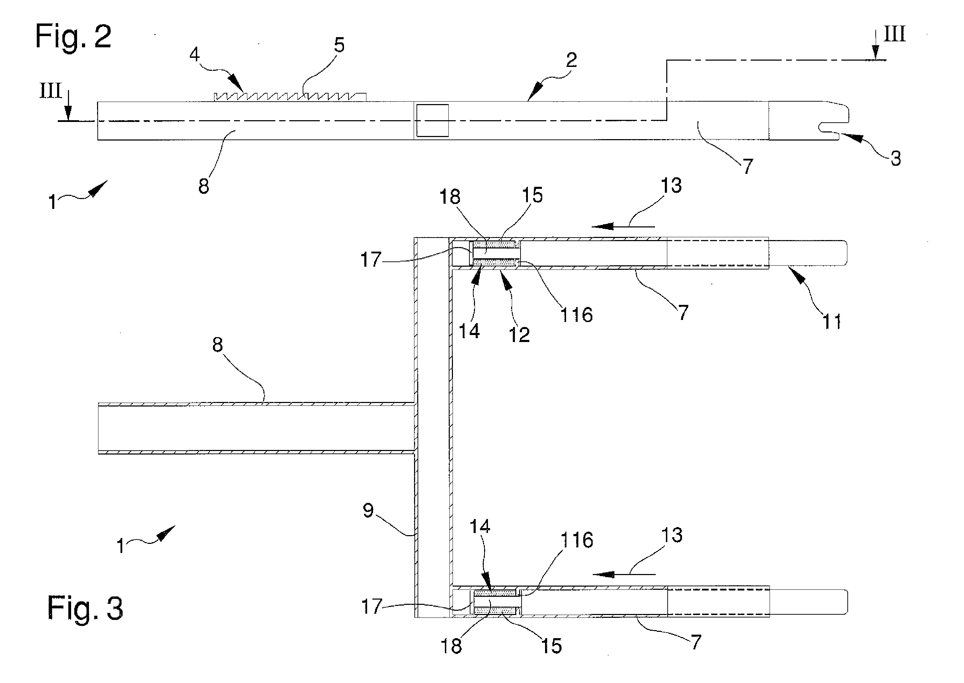

figure 2 is a raised side view of a part of the safety device according to the invention, in a first embodiment;
figure 3 is a section view of the safety device of figure 2 according to the section line III-III, with the moving portion in idle configuration;

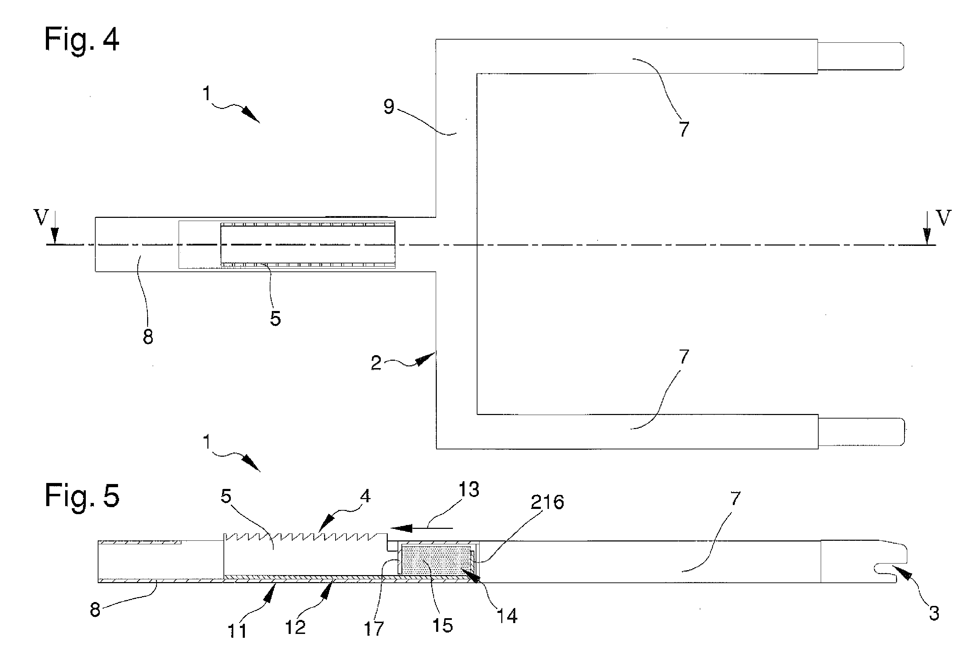

figure 4 is a raised side view of a part of the safety device according to the invention, in a second embodiment;
figure 5 is a section view the safety device of figure 4 according to the section line V-V, with the moving portion in idle configuration;

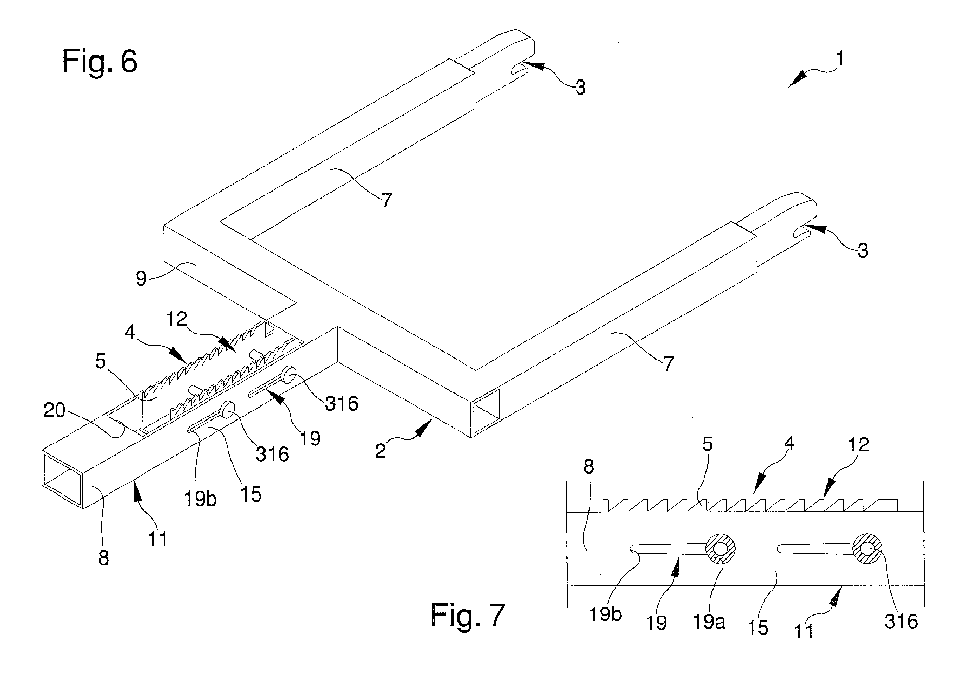

figure 6 is a partial perspective view of the safety device according to the invention, in a third embodiment;
figure 7 is a raised side view of a detail of the safety device of figure 6, with the moving portion in idle configuration;

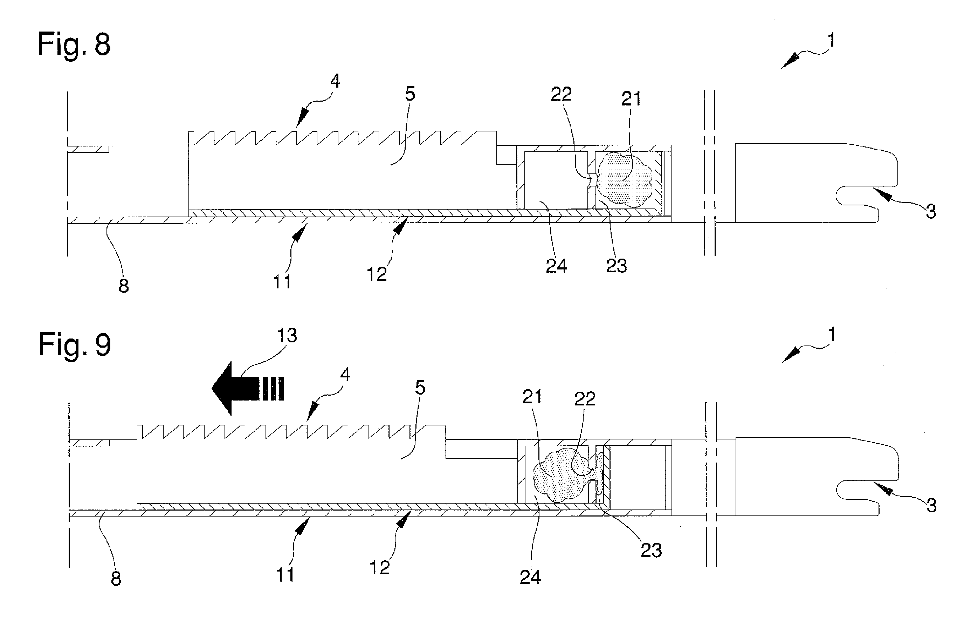

figure 8 is a longitudinal section view of a part of the safety device according to
the invention, in a fourth embodiment and with the moving portion in idle configuration;
figure 9 is a longitudinal section view of the safety device of figure 8, with the moving portion moved towards the emergency configuration.

With particular reference to such figures, globally indicated by 1 is an Isofix cushioned safety device.

The device 1 comprises a frame 2 having at least two fastening areas 3 associable with the seat S of a car and at least a supporting area 4 for a child seat A. Suitably, the supporting area 4 comprises a rack 5, on which is positioned the seat A, suitable for allowing the sliding of the seat itself along an adjustment direction identified in the illustrations by the two-directional arrow 6.

Preferably, the frame 2 is substantially Y shaped and comprises at least two hooking elements 7 substantially parallel the one to the other, in correspondence to which are defined the fastening areas 3, and at least a supporting element 8, in correspondence to which is defined the supporting area 4, connected to the hooking elements 7. More precisely, between the supporting element 8 and the hooking elements 7 is placed a connection element 9 arranged, in the particular embodiment shown in the illustrations, substantially at right angles to the hooking elements 7 and to the supporting element 8.

The frame 2 also comprises an anchoring element 10, of the type of a vertical upright associated substantially at right angles to the supporting element 8 and having, at one extremity, a connection area associable with the floor of the car and not visible in detail in the illustrations.

More in particular, the frame 2 comprises at least a fixed portion 11, comprising the fastening areas 3, and at least a moving portion 12, comprising the supporting area 4, associated sliding with the fixed portion 11 and moving from an idle configuration, in which the supporting area 4 is at a substantially predefined distance from the fastening areas 3, to an emergency configuration, in which the supporting area 4 is moved away from the fastening areas 3 with respect to the idle configuration. The direction of movement of the moving portion 12 from the idle configuration to the emergency configuration is shown in the illustrations by means of the arrow 13.

The device 1 comprises then cushioning means associated with the frame 2 and suitable for absorbing, during an accident, at least part of the kinetic energy of the seat A.

According to the invention, the cushioning means comprise either inelastic deformation means 14 placed between the fastening areas 3 and the supporting area 4 or fluid-dynamic means.

Advantageously, the cushioning means are placed between the fixed portion 11 and the moving portion 12 of the frame 2.

In the embodiments shown in the illustrations from 2 to 7, the cushioning means comprise inelastic deformation means 14.

Advantageously, the inelastic deformation means 14 comprise at least a deformable element 15 and at least a deforming element 16 suitable for contacting the deformable element 15 during the stroke of the moving portion 12 from the idle configuration towards the emergency configuration.

The deformable element 15 can be made, for example, of a metal or synthetic material with honeycomb structure, or of a material with plastic behaviour, meaning suitable for deforming irreversibly following a compression action.

In the embodiments described below, the elements making up the deforming elements 16 are identified by corresponding reference numbers wherein the first digit indicates the relative embodiment and the following digit correspond to the reference number of the deforming element itself.

In the embodiments shown in the illustrations from 2 to 5, the deforming element 16 is associated with the moving portion 12, the fixed portion 11 defines a locator stop 17 facing the deforming element 16 and the deformable element 15 is placed between the deforming element 16 and the stop 17.

Suitably, the deforming element 16 moves closer to the locator stop 17 during the movement of the moving portion 12 towards the emergency configuration.

In the first embodiment shown in the illustrations 2 and 3, the inelastic deformation means 14 are positioned along the hooking elements 7. In this first embodiment, therefore, the moving portion 12 comprises the supporting element 8, the connecting element 9 and a part of the hooking elements 7, while the fixed portion 11 is composed of the remaining part of the hooking elements 7.

More in particular, the part of the hooking elements 7 of the moving portion 12 is hollow inside and the deforming element 16 is made up of a wall 116 arranged substantially at right angles to the extension of the hooking elements 7 themselves. The part of the hooking elements 7 making up the fixed portion 11 on the other hand is fitted inside the corresponding part of the moving portion 12 and has at one extremity the relative fastening area 3 and at the opposite extremity the stop 17. The stop 17 is arranged at the extremity of a stem 18 which crosses the wall 116. In point of fact, the wall 116, during the movement of the moving portion 12 towards the emergency configuration, slides on the stem 18 and compresses the deformable element 15.

In the second embodiment, shown in the illustrations 4 and 5, the inelastic deformation means 14 are positioned along the supporting element 8 and, in particular, in correspondence to the joint of the supporting element 8 and the connection element 9.

In this embodiment, the moving part 12 comprises the rack 5 and the deforming element 16 is made up of a wall 216 integrally associated with the rack itself and arranged inside the supporting element 8, which is hollow inside. The rack 5 is fitted inside a slit defined on the upper part of the supporting element 8 itself and rests with one of its extremities against the stop 17, defined by the supporting element 8, in the idle configuration of the moving portion 12.

In the third embodiment, shown in the illustrations 6 and 7, the deformable element 15 is associated with one between the fixed portion 11 and the moving portion 12 and defines one or more slots 19 of elongated shape.

In this embodiment, the deforming element 16 is made up of one or more pins 316 associated with the other between the fixed portion 11 and the moving portion 12 and fitted in a corresponding slot 19 to deform it in an inelastic way during the movement of the moving portion 12 towards the emergency configuration.

Advantageously, each slot 19 has a housing seat 19a for the relative pin 316, with the moving portion 12 in idle configuration, and a bottleneck 19b, of elongated shape and width below the thickness of the pin 316, communicating with the housing seat 19a. The pin 316 slides along the bottleneck 19b during the movement of the moving portion 12 from the idle configuration towards the emergency configuration.

In this third embodiment, the moving portion 12 comprises the rack 5, which is fitted sliding inside a slit 20 defined on the upper part of the supporting element 8, and the pins 316 integrally associated with the rack 5.

In the particular embodiment shown, the deformable element 15 is composed of the side walls of the supporting element 8 and defines two pairs of slots 19 arranged in succession to one another. The slots 19 of each pair are defined on the side walls opposite the supporting element 8 and are arranged parallel and aligned with one another.

The deforming element 16 therefore is composed of two pins 316 integrally associated with the rack 5 and each cooperating with a relative pair of slots 19.

In the idle configuration of the moving portion 12, the pins 316 are fitted inside the relative housing seats 19a, while in the movement towards the emergency configuration, they slide along the corresponding bottlenecks 19b.

It appears obvious to an expert in the sector how this third embodiment can be modified by associating the deformable element 15, and therefore the slots 19, with the moving portion 12 and the deforming element 16, i.e., the pins 316, with the fixed portion 11. In this case, it is therefore the slots 19 that slide along the pins 316 with their bottlenecks 19b.

An embodiment cannot however be ruled out in which the deformable element 15 is composed of the pins and the deforming element 16 of the slots, made therefore of a more rigid material than that of the pins. In this embodiment, not shown in the illustrations, during the movement of the moving portion 12 towards the emergency configuration, the pins fit in the bottlenecks of the corresponding slots, and become deformed.

Advantageously, the device 1 can be made according to a further embodiment, this too not shown in the illustrations, which envisages the combination of the second and the third above mentioned embodiments.

More in particular, in this embodiment, the deforming element 16 comprise both a wall 216 associated integral with the rack 5 and one or more pins 316 these too associated integral with the rack 5, the latter being fitted sliding inside the slit 20 defined on the upper part of the supporting element 8, and fitted inside the corresponding slots 19. In this embodiment, therefore, the deformable element 15 is both placed between the wall 216 and the stop 17 and associated with the side walls of the supporting element 8, on which are defined the slots 19.

In the fourth embodiment, shown in the illustrations 8 and 9, the cushioning means comprise fluid-dynamic means.

Such fluid-dynamic means comprise at least a fluid 21 suitable for flowing out through an orifice 22 during the movement of the moving portion 12 from the idle configuration towards the emergency configuration.

Advantageously, the fluid 21 is placed between the fixed portion 11 and the moving portion 12.

More in particular, the frame 2 defines a containment chamber 23 for containing the fluid 21 and the fixed and moving portions 11 and 12 define two walls of the chamber 23 facing one another and moving reciprocally closer to one another by effect of the movement of the moving portion 12 towards the emergency configuration. The movement of the moving portion 12 towards the emergency configuration therefore causes a reduction in the volume of the chamber 23. Suitably, the orifice 22 is defined on one of the walls of the chamber 23 and, preferably, on one of those defined by the fixed portion 11 and by the moving portion 12.

The orifice 22 communicates with the chamber 23 for containing the fluid 21 on one side and on the opposite side with a drainage chamber 24 for draining the fluid itself.

The fluid 21 is therefore contained inside the chamber 23 with the moving portion in idle configuration, while it flows out at least in part into the chamber 24 during the movement of the moving portion 12 towards the emergency configuration.

Preferably, the fluid 21 is made of a synthetic material, of the type of a gel or the like, suitable for dissipating the energy by extrusion. In this case too, as in the previously illustrated embodiments, the extrusion phenomenon, i.e., the flow of the fluid 21 through the orifice 22, is of the irreversible type.

The operation of the present invention is as follows.

In the first and in the second embodiments, shown in the illustrations 2, 3 and 4, 5, the force acting on the seat A during an accident, is transferred to the rack 5 with which the seat itself is integrally associated.

The rack 5, in turn, transfers such force to the parts integral with it, as far as the deforming element 16, which starts to move in the direction of the arrow 13.

The deforming element 16, made up in the present embodiments by the walls 116 and 216, cooperating with the locator stop 17 thus exercises a pressure on the deformable element 15, which is thus compressed and plastically deformed.

The inelastic deformation of the deformable element 15 thus allows to absorb at least part of the force acting on the seat A.

In the third embodiment, shown in the illustrations 6 and 7, the force acting on the seat A during an accident transfers, like in the previous case, to the rack 5.

In the idle configuration, the pins 316 associated with the rack 5 are fitted in the corresponding housing seats 19a.

By effect of the force acting on the seat A during an accident, the rack 5 starts moving in the direction indicated by the arrow 13, and moves towards the emergency configuration. During such movement, the pins 316 exit from the respective housing seats 19a and enter the relative bottlenecks 19b.

The width of the bottlenecks 19b is such as to exercise a resistance to the passage of the corresponding pins 316 which, to move forward, must deform the edge of the bottlenecks themselves.

The resistance offered by the bottlenecks 19b to the passage of the relative pins 316 in this case too allows absorbing at least part of the kinetic energy of the seat A.

In the fourth embodiment, shown in the illustrations 8 and 9, the force acting on the seat A and which discharges on the rack 5, causes the latter and the parts associated integrally with it to move in the direction indicated by the arrow 13.

Such movement causes a reduction in the volume of the containment chamber 23 and consequently an increase in the pressure acting on the fluid 21 contained in it.

Such pressure increase causes the fluid 21 to exit through the orifice 22 and to enter the drainage chamber 24.

The density of the fluid 21 and the section of the orifice 22 cause the fluid itself, during its flow from the containment chamber 23 to the drainage chamber 24, to exercise a resistance to the movement of the moving portion 12 from the idle configuration to the emergency configuration.

Such resistance absorbs, at least in part, the kinetic energy of the seat A.

Furthermore, the nature of the fluid 21 contained in the chamber 23, a gel, prevents an elastic counterblow from acting on the seat A once the kinetic energy of the seat A has been exhausted.

It has in point of fact been ascertained how the described invention achieves the proposed objects and in particular the fact is underlined that the Isofix cushioned safety device according to the invention allows efficiently absorbing the kinetic energy of the seat during an accident, and at the same time prevents elastic counterblows acting on it that could be dangerous for the safety of the child.

Furthermore, the safety device according to the invention can be easily fitted to any type of Isofix device on the market, thus allowing ample flexibility of use.

## Claims

1. Isofix cushioned safety device (1) comprising:
- a frame (2) having at least two fastening areas (3) associable with a car seat (S) and at least a supporting area (4) for a child seat (A);
- cushioning means associated with said frame (2) and suitable for absorbing at least part of the kinetic energy of the child seat (A) during an accident;
**characterized by** the fact that said cushioning means comprise:
- either inelastic deformation means (14) placed between said fastening areas (3) and said supporting area (4);
- or fluid-dynamic means comprising at least a fluid (21) suitable for flowing out through an orifice (22) defined in said frame (2).

2. Device (1) according to the claim 1, **characterized by** the fact that said frame (2) comprises at least a fixed portion (11), comprising said fastening areas (3), and at least a moving portion (12), comprising said supporting area (4), associated sliding with said fixed portion (11) and moving from an idle configuration, in which said supporting area (4) is located at a substantially preset distance from said fastening areas (3), to an emergency configuration, in which said supporting area (4) is moved away from said fastening areas (3) with respect to said idle configuration, said cushioning means being placed between said fixed portion (11) and said moving portion (12).

3. Device (1) according to the claim 2, **characterized by** the fact that said inelastic deformation means (14) comprise at least an inelastically deformable element (15) and at least a deforming element (16) suitable for contacting said deformable element (15) during the movement of said moving portion (12) towards said emergency configuration.

4. Device (1) according to the claim 3, **characterized by** the fact that said deforming element (16) is associated with said moving portion (12), by the fact that said fixed portion (11) defines a locator stop (17) facing said deforming element (16) and by the fact that said deformable element (15) is placed between said deforming element (16) and said locator stop (17), said deforming element (16) moving near to said locator stop (17) during the movement of said moving portion (12) towards said emergency configuration.

5. Device (1) according to one or more of the preceding claims, **characterized by** the fact that said frame (2) comprises at least two hooking elements (7) substantially parallel with each other and in correspondence to which said fastening areas (3) are defined, and at least a supporting element (8) connected to said hooking elements (7) and in correspondence to which said supporting area (4) is defined.

6. Device (1) according to the claim 5, **characterized by** the fact that said inelastic deformation means (14) are positioned along said hooking elements (7).

7. Device (1) according to the claim 5, **characterized by** the fact that said inelastic deformation means (14) are positioned along said supporting element (8).

8. Device (1) according to one or more of the claims from 4 to 7, **characterized by** the fact that said deformable element (15) comprises a metal or synthetic material with honeycomb structure.

9. Device (1) according to the claim 3, **characterized by** the fact that said deformable element (15) is associated with one between said fixed portion (11) and said moving portion (12) and defines at least a slot (19) of elongated shape and **characterized by** the fact that said deforming element (16) comprises at least a pin (316) associated with the other between said fixed portion (11) and said moving portion (12) and is fitted in said slot (19) to deform it in an inelastic way during the movement of said moving portion (12) towards said emergency configuration.

10. Device (1) according to the claim 9, **characterized by** the fact that said slot (19) has a housing seat (19a) for said pin (316) with said moving portion (12) in idle configuration and a bottleneck (19b) communicating with said housing seat (19a), of elongated shape and width below the thickness of said pin (316), the latter sliding along said bottleneck (19b) during the movement of said moving portion (12) towards said emergency configuration.

11. Device (1) according to the claim 2, **characterized by** the fact that said fluid (21) is suitable for flowing out through said orifice (22) during the movement of said moving portion (12) towards said emergency configuration.

12. Device (1) according to the claim 11, **characterized by** the fact that said fluid (21) is placed between said fixed portion (11) and said moving portion (12).

13. Device (1) according to the claim 12, **characterized by** the fact that said frame (2) defines a containment chamber (23) for containing said fluid (21) and by the fact that said fixed portion (11) and moving portion (12) define two walls of said containment chamber (23) facing each other and reciprocally moved closer to one another by effect of the movement of said moving portion (12) towards said emergency configuration, said orifice (22) being defined on one of the walls of said containment chamber (23).

14. Device (1) according to the claim 13, **characterized by** the fact that said orifice (22) communicates with said containment chamber (23) on one side and on the opposite side with a drainage chamber (24), said fluid (21) flowing from said containment chamber (23) to said drainage chamber (24) during the movement of said moving portion (12) towards said emergency configuration.

15. Device (1) according to one or more of the claims from 11 to 14, **characterized by** the fact that said fluid (21) is a gel.
